# DEMANDE DE BREVET EUROPEEN

(11) **EP 1 473 570 A1**
(43) Date de publication de la demande: **03.11.2004**
(21) Numéro de dépôt: 04291087.7
(22) Date de dépôt: 27.04.2004
(51) Int. Cl.: G01P 3/44, F16C 35/077, F16C 19/52, H02K 29/14

(54) **Roulement équipé d'un dispositif intégré de détection de la vitesse de rotation**

(30) Priorité: 02.05.2003 FR 0305421
(71) Demandeur: Aktiebolaget SKF, S-415 50 Göteborg (SE)
(72) Inventeur: Niarfeix, François, 37390 Cerelles (FR); Huhn, Norbert, 37230 Fondettes (FR); Huhn, Elke, 37230 Fondettes (FR)
(74) Mandataire: Casalonga, Axel

(57) **Abrégé**

Dispositif de roulement instrumenté 1 comprenant un roulement pourvu d'une bague tournante 4 et d'une bague non tournante 2, un bloc capteur 26 monté solidaire de la bague non tournante 2, et un boîtier 8 logeant ledit roulement et ledit bloc capteur 26, le boîtier 8 comprenant deux portions radiales dirigées, l'une vers l'axe 12 du dispositif, et l'autre vers l'extérieur, et une portion tubulaire 10 raccordant lesdites portions radiales, la portion radiale 9 dirigée vers l'extérieur formant un moyen de positionnement axial et de fixation du dispositif sur un support 13, la portion radiale 11 dirigée vers l'axe 12 du dispositif formant un moyen de positionnement axial et d'immobilisation axiale du roulement dans le boîtier 8.

## Description

La présente invention concerne le domaine des paliers à roulement instrumentés munis d'un ensemble de détection des paramètres de rotation, tels que la position angulaire, le sens de rotation, la vitesse, l'accélération, etc. Ce type de roulement est souvent utilisé dans les moteurs électriques.

Un moteur électrique comprend en général un rotor monté à rotation dans un stator grâce à deux roulements généralement de type rigide à billes et bagues en acier, disposés à chaque extrémité de l'arbre.

Les bagues intérieures des roulements sont montées sur l'arbre avec un ajustement serré, tandis que les bagues extérieures sont disposées dans des logements ménagés dans le carter du moteur. Le carter est généralement réalisé en un alliage léger, par exemple à base d'aluminium ou de magnésium.

Dans les montages conventionnels, une bague extérieure de l'un des deux roulements est immobilisée axialement dans son logement par des moyens appropriés, tels que circlips et/ou épaulement et est éventuellement monté avec serrage dans le logement, tandis que la bague extérieure de l'autre roulement doit pouvoir se déplacer axialement légèrement par rapport au carter. Dans ce but, l'autre roulement est souvent monté libre dans son logement.

En effet, lors de l'élévation de température du moteur, sous l'action des dilatations différentielles des différents constituants du moteur, la distance axiale séparant le deuxième roulement du premier roulement qui est axialement fixe par rapport au carter, est susceptible de varier légèrement. Le deuxième roulement doit donc être capable de se déplacer très légèrement dans le sens axial par rapport à son logement sans que le bon fonctionnement du montage n'en soit affecté.

Par ailleurs, dans certaines applications utilisant des moteurs électriques, par exemple dans un dispositif de commande de direction électrique de véhicule, les contraintes mécaniques et thermiques auxquelles est soumis le moteur sont importantes. L'arbre du moteur est soumis à des efforts axiaux relativement élevés et pouvant être dirigés dans des directions opposées, lesdits efforts devant être repris intégralement par le roulement fixé au carter axialement et sans prise de jeu axial par rapport au logement.

D'autre part, les roulements du moteur qui sont généralement montés dans des logements en alliage léger à base d'aluminium ou de magnésium ne subissent pas les mêmes variations dimensionnelles que les logements. Il en résulte une prise de jeu radial de la bague non tournante par rapport à son logement et des risques de glissement en rotation de ladite bague non tournante par rapport audit logement.

Le document FR-A-2 824 367 décrit un ensemble comprenant un roulement instrumenté et un logement associé par une pièce d'emmanchement, en particulier pour un moteur de direction de véhicule. Toutefois, un tel roulement est inapte à supporter des charges axiales importantes sans prise de jeu ou détérioration du système en raison de la fragilité de l'anneau qui supporte le capteur, des languettes élastiques, et de la pièce d'emmanchement du roulement.

L'invention propose un dispositif de palier à roulement instrumenté apte à supporter des charges axiales importantes et de fortes variations de température.

La présente invention se propose de remédier aux inconvénients évoqués ci-dessus.

La présente invention propose un dispositif de palier à roulement instrumenté particulièrement économique et rigide.

Le dispositif de roulement instrumenté, selon un aspect de l'invention, comprend un roulement pourvu d'une bague tournante et d'une bague non tournante, un bloc capteur monté solidaire de la bague non tournante, et un boîtier logeant ledit roulement et ledit bloc capteur. Ledit boîtier comprend deux portions radiales dirigées l'une vers l'axe du dispositif et l'autre vers l'extérieur, et une portion tubulaire raccordant lesdites portions radiales, le bloc capteur étant en contact avec un alésage de la portion tubulaire. La portion radiale dirigée vers l'extérieur forme un moyen de positionnement axial et de fixation du dispositif sur un support. La portion radiale dirigée vers l'axe du dispositif forme un moyen de positionnement axial et d'immobilisation axiale du roulement dans le boîtier.

Les portions radiales peuvent être disposées à des extrémités opposées de la portion tubulaire. Le boîtier permet donc la fixation rigide du dispositif sur un support pour une large plage de température.

Avantageusement, la portion radiale dirigée vers l'axe du dispositif recouvre au moins partiellement une face latérale de la bague non tournante du roulement pour une immobilisation efficace et n'exerçant pas d'effort de torsion sur la bague extérieure.

Avantageusement, la portion radiale dirigée vers l'axe du dispositif recouvre au moins partiellement l'espace radial entre les bagues du roulement. Ladite portion radiale peut former une étanchéité par passage étroit avec la bague tournante du roulement. On assure ainsi l'étanchéité d'un côté des éléments roulants de façon particulièrement économique. La présence d'un joint à lèvre frottante est possible mais pas indispensable. L'absence de joint permet également de se passer de rainures de fixation du joint dans l'une des bagues, d'où une économie supplémentaire. La bague extérieure présente donc une section transversale rectangulaire à l'exception du chemin de roulement. Par ailleurs, ladite portion radiale est en contact avec une face radiale de la bague non tournante, assurant ainsi son positionnement axial et son immobilisation axiale dans un sens.

Dans un mode de réalisation de l'invention, l'immobilisation axiale du roulement et du bloc capteur dans le boîtier est assurée dans un sens par la portion radiale dirigée vers l'axe du dispositif et dans l'autre sens par une soudure entre le boîtier et le bloc capteur. La soudure peut être réalisée en cordon sur la périphérie du bloc capteur. La soudure peut comprendre un cordon continu. Alternativement, le cordon de soudure peut être discontinu.

Dans un autre mode de réalisation de l'invention, l'immobilisation axiale du roulement et du bloc capteur dans le boîtier est assurée dans un sens par la portion radiale dirigée vers l'axe du dispositif et dans l'autre sens par une déformation du boîtier. La déformation peut être obtenue par moletage. Une telle déformation dont l'obtention est économique, assure également un maintien mutuel extrêmement rigide de la bague non tournante du roulement et du boîtier. La déformation du boîtier peut être en contact avec la périphérie du bloc capteur. La déformation du boîtier peut être continue ou discontinue. Le bloc capteur et la bague extérieure sont en contact par des surfaces radiales aptes à transmettre des efforts axiaux importants. Le bloc capteur et la bague extérieure sont donc fixés fermement au boîtier.

Dans un mode de réalisation de l'invention, le bloc capteur comprend une portion métallique périphérique en contact avec la bague non tournante du roulement.

Avantageusement, le bloc capteur comprend un flasque de protection et de fermeture fixé rigidement sur une partie périphérique dudit bloc capteur. Le flasque peut se présenter sous la forme d'un disque pourvu de rebords tubulaires et assure l'étanchéité par passage étroit de la zone voisine du capteur. On peut, là encore, éviter l'utilisation d'un joint à lèvre nécessitant une surface de frottement rectifiée, et une gorge de support.

Avantageusement, le bloc capteur comprend une carte de circuit imprimé supportant au moins un élément capteur et maintenue en place par un flasque.

Avantageusement, le bloc capteur comprend un anneau formant une cale axiale entre la bague non tournante et le moyen de fixation formé par la déformation ou le cordon de soudure du boîtier. En d'autres termes, le roulement est immobilisé axialement dans sens par la portion radiale intérieure du boîtier, dans l'autre sens par la coopération du bloc capteur et du moyen de fixation faisant partie du boîtier.

L'invention propose également un moteur électrique comprenant un carter, un stator, un rotor et un dispositif de roulement instrumenté comprenant un roulement pourvu d'un bague tournante solidaire du rotor, une bague non tournante solidaire du carter, un bloc capteur monté solidaire de la bague non tournante, et un boîtier logeant ledit roulement et ledit bloc capteur. Le boîtier comprend deux portions radiales dirigées l'une vers l'axe du dispositif et l'autre vers l'extérieur, et une portion tubulaire raccordant lesdites portions radiales. La portion radiale dirigée vers l'extérieur forme un moyen de positionnement axial et de fixation du dispositif sur le carter. La portion radiale dirigée vers l'axe du dispositif forme un moyen de positionnement axial et d'immobilisation axiale du roulement dans le boîtier. Un tel moteur électrique peut être construit de façon économique tout en étant apte à supporter les charges axiales importantes et de fortes variations de température.

Avantageusement, la portion radiale dirigée vers l'extérieur est fixée sur le carter, par exemple par vissage. On supprime ainsi le jeu axial entre le boîtier le carter. La portion radiale dirigée vers l'extérieur peut être en contact avec une surface radiale du carter en vue d'une bonne transmission des efforts axiaux. Le jeu axial entre la bague non tournante et le boîtier est supprimé par la solidarisation axiale obtenue par soudure ou par déformation du boîtier.

Un anneau codeur peut être prévu, supporté par la bague tournante du roulement tout en présentant un faible entrefer avec le capteur. L'anneau codeur peut être de type magnétique multipolaire. L'absence de jeu axial entre le roulement et l'anneau codeur garantit un entrefer constant et donc un signal de sortie du capteur fiable. En outre, le dispositif de roulement forme une unité compacte facile à mettre en place dans un logement de carter. Il est possible d'élargir les tolérances de fabrication du logement du carter, la bague non tournante du roulement n'étant pas emmanchée directement dans le carter mais par l'intermédiaire du boîtier en tôle.

La présente invention sera mieux comprise à l'étude de la description détaillée de quelques modes de réalisation pris à titre nullement limitatifs et illustrés par les dessins annexés, sur lesquels:
- la figure 1 est une vue en coupe axiale d'une extrémité d'un moteur électrique équipé d'un dispositif de roulement selon un aspect de l'invention;
- la figure 2 est une vue de détail de la figure 1; et
- la figure 3 est une variante de la figure 2.

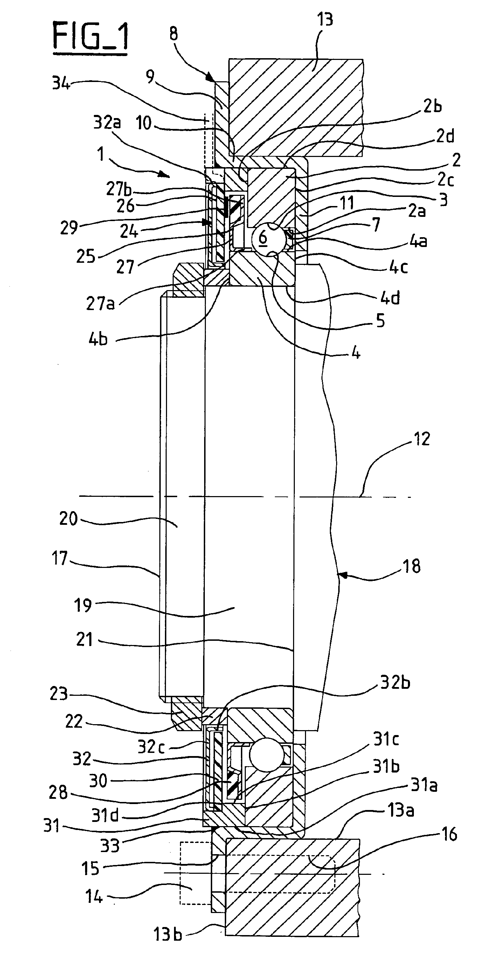

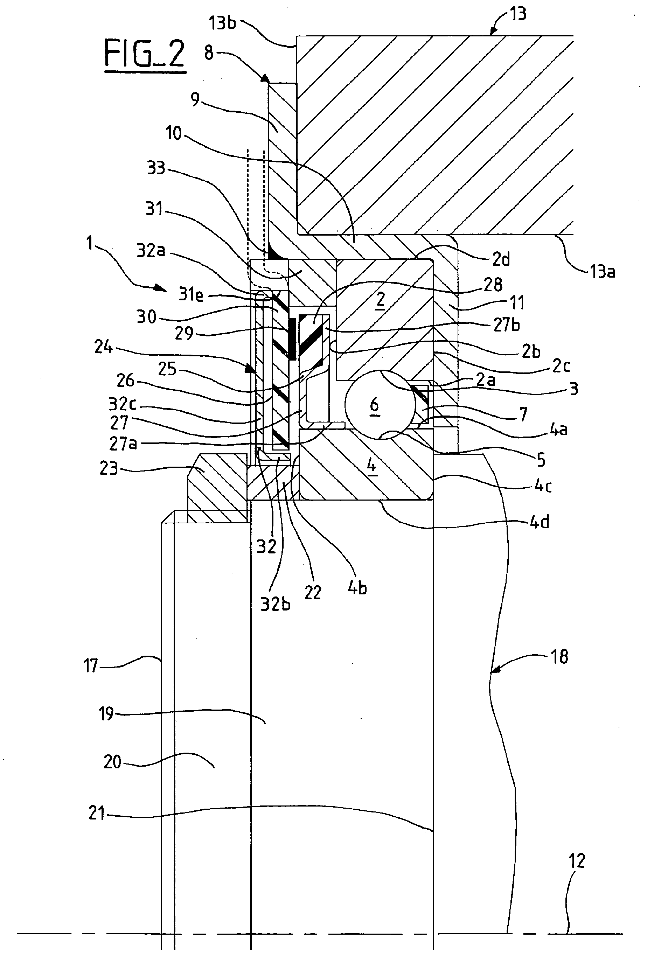

Comme on peut le voir sur les figures 1 et 2, le roulement 1 comprend une bague extérieure non tournante 2 pourvue sur son alésage 2a d'un chemin de roulement toroïdal 3, une bague intérieure tournante 4 pourvue sur sa surface extérieure 4a d'un chemin de roulement toroïdal 5, et une rangée d'éléments roulants 6, ici des billes, disposés entre le chemin de roulement 3 de la bague extérieure 2 et le chemin de roulement 5 de la bague intérieure 4. Les éléments roulants 6 sont maintenus à espacements circonférentiels réguliers par une cage 7 réalisée en matériau synthétique. En variante, la cage peut être métallique. Bien entendu, on pourrait utiliser à la place des billes des rouleaux ou des aiguilles. Les bagues intérieure 4 et extérieure 2, massives, sont obtenues par usinage conventionnel d'une ébauche en acier, et présentent une excellente rigidité. Pour des raisons de compacité axiale, la bague extérieure est moins longue axialement que la bague intérieure 4, mais plus haute radialement.

La bague extérieure 2 est pourvue de deux surfaces latérales radiales 2b, 2c opposées et d'une surface extérieure cylindrique 2d. Dans la variante représentée, la bague extérieure 2 est dépourvue de rainures de fixation de joints. La bague intérieure 4 est également pourvue d'un alésage 4d et de deux surfaces latérales radiales 4b, 4c opposées, la surface latérale 4c étant dans le même plan radial que la surface radiale 2c et d'un alésage 4d.

La bague extérieure 2 est disposée dans un boîtier 8 de forme générale annulaire, réalisé en tôle d'acier emboutie, et comprenant une portion radiale extérieure 9, une portion tubulaire 10 et une portion radiale intérieure 11. La portion radiale extérieure 9 est disposée à une extrémité de la portion tubulaire 10 et s'étend vers l'extérieur, tandis que la portion radiale intérieure 11 est disposée à l'extrémité opposée de la portion tubulaire 10 et s'étend en direction de l'axe géométrique 12 du dispositif.

La surface extérieure 2d de la bague extérieure 2 est en contact avec la portion tubulaire 10 et la surface radiale 2c est en contact avec la portion radiale intérieure 11. La bague extérieure 2 est ainsi positionnée par rapport au boîtier 8 et immobilisée axialement dans un sens. Ladite portion radiale intérieure 11 s'étend au-delà de la bague extérieure 2 en direction de la bague intérieure 4 avec laquelle elle forme un passage étroit assurant l'étanchéité du roulement d'un côté des éléments roulants 6. En d'autres termes, la portion radiale intérieure 11 obture en majeure partie l'espace annulaire radial entre la surface extérieure 4a de la bague intérieure 4 et l'alésage 2a de la bague extérieure 2.

Le boîtier 8 est fixé à un support tel qu'un carter 13 de moteur électrique, la surface extérieure de la portion tubulaire 10 du boîtier 8 venant dans l'alésage 13a du carter 13, tandis que la portion radiale extérieure 9 est en contact avec une surface radiale d'extrémité 13b du carter 13. La fixation du boîtier 8 sur le carter 13 est assurée par une pluralité de vis dont une référencée 14 est représentée schématiquement en traits pointillés sur la figure 1 passant dans un trou traversant lisse 15 de la portion radiale extérieure 9 du boîtier 8 et venant en prise dans un trou fileté 16 ménagé dans le boîtier 13 à partir de sa surface radiale 13b.

Le roulement 1 est monté sur l'extrémité 17 d'un arbre tournant 18 du moteur électrique. L'extrémité 17 de l'arbre 18 comprend une surface cylindrique 19, limitée du côté extérieur par une surface extérieure cylindrique 20 filetée de diamètre inférieur à celui de la surface cylindrique 19. Un épaulement est donc formé entre la surface cylindrique 19 et la surface extérieure cylindrique 20. La surface cylindrique 19 est limitée du côté opposé par un épaulement 21.

La bague intérieure 4 est emmanchée sur la surface extérieure cylindrique 19 de l'extrémité 17 de l'arbre 18. La surface latérale radiale 4c de la bague intérieure 4 est en contact avec l'épaulement radial 21 de l'arbre 18.

Une rondelle entretoise annulaire 22, de section rectangulaire, est disposée en contact avec la surface radiale 4b opposée à la surface 4c et en contact avec la surface cylindrique extérieure 19. La rondelle entretoise 22 fait légèrement saillie axialement au-delà de la surface extérieure cylindrique 19. Un écrou 23 est vissé sur la surface extérieure filetée 20 et vient appuyer axialement sur la rondelle entretoise 22 du côté opposé à la bague intérieure 4. En d'autres termes, la bague intérieure 4 est serrée axialement entre l'épaulement 21 et la rondelle 22, elle-même serrée par l'écrou 23. On assure ainsi la solidarisation axiale et circonférentielle de la bague intérieure tournante 4 et de l'arbre 18. La rondelle 22 présente un diamètre extérieur inférieur à celui de la bague intérieure 4 pour augmenter l'espace radial disponible pour un codeur 25.

En variante, la rondelle 22 peut être monobloc avec la bague intérieure 4. Dans une autre variante, la rondelle 22 peut être fixée à la bague intérieure 4 préalablement au montage du roulement, par exemple par collage ou soudage.

Le roulement 1 comprend en outre un ensemble capteur d'informations 24 équipé d'un codeur tournant 25 et d'un bloc capteur 26. Le codeur 25 comprend un support annulaire métallique 27 en tôle dont une portion tubulaire de faible diamètre 27a est emmanchée sur la surface extérieure 4a de la bague intérieure 4 du côté de la cale 22 et dont une portion de grand diamètre 27b s'étend à proximité de la surface radiale 2b de la bague extérieure 2.

On rappellera ici que la bague intérieure 4 est plus large axialement que la bague extérieure 2, ce qui permet, d'une part, de supporter le codeur 25 par emmanchement et, d'autre part, de faire voisiner la portion de grand diamètre 27b du support 27 et la surface radiale 2b de la bague extérieure 2. Le codeur 25 comprend également une partie active 28 surmoulée sur la portion de grand diamètre 27b, du côté opposé à la bague extérieure 2 et radialement au niveau de ladite bague extérieure 2, en étant sensiblement alignée avec la surface radiale 4b de la bague intérieure 4. La partie active 28 est de type magnétique multipolaire et peut être réalisée en plastoferrite ou en élastoferrite magnétisée.

Le bloc capteur 26 comprend un élément capteur 29, une carte de circuit imprimé 30, un anneau métallique 31 et un flasque 32.

L'anneau métallique 31 présente une surface extérieure 31a en contact avec l'alésage de la portion tubulaire 10 du boîtier 2, une surface radiale 31b en contact avec la surface radiale 2b de la bague extérieure 2, un alésage 31c entourant radialement l'extrémité de grand diamètre du codeur 25, un redan 31d limitant l'alésage 31c, et un autre alésage 31e au-delà du redan 31d vers l'extérieur. L'autre alésage 31e présente un diamètre supérieur à celui de l'alésage 31c.

La fixation de l'anneau 31 dans le boîtier 8 est assurée par soudure sous la forme d'un cordon 33 formé entre la surface extérieure 31a de l'anneau 31 et la jonction entre la portion radiale extérieure 9 et la portion tubulaire 10 du boîtier 8. Ainsi, la bague extérieure 2 est maintenue axialement d'un côté par la portion radiale intérieure 11 du boîtier 8 et du côté opposé par l'anneau 31 fixé rigidement au boîtier 8 par soudure. La bague extérieure 2 sera emmanchée dans le boîtier 8 de préférence avec un certain serrage et, lors de la soudure, une précontrainte axiale pourra être exercée sur l'anneau 31 afin de renforcer la solidarisation en rotation de la bague extérieure 2 et du boîtier 8. L'anneau métallique 31 peut être réalisé en acier. Le bloc capteur 26 coopère ainsi avec le boîtier 8 pour assurer l'immobilisation axiale du roulement dans un sens. L'immobilisation axiale dans l'autre sens est assurée par la portion radiale intérieure 11 du boîtier 8.

La bague extérieure 2 et le boîtier 8 étant réalisés tous deux en acier ont un coefficient de dilatation quasi identique, ce qui élimine les risques de glissement accidentel en rotation de la bague extérieure 2 dans le boîtier 8 lors des élévations de température (pas de dilatations différentielles des pièces dans la zone de contact).

La carte de circuit imprimé 30 présente une forme radiale annulaire, est montée autour de l'alésage 31e et vient en contact avec le redan 31 de l'anneau 30 en s'étendant radialement vers l'intérieur à partir dudit redan 31d à faible distance du codeur 25. L'élément capteur 29 est supporté par la carte de circuit imprimé 30 du côté du codeur 25 en étant disposé avec un faible entrefer axial par rapport à la partie active 28 dudit codeur 25.

Le flasque 32 se présente sous la forme d'un disque en tôle de faible épaisseur pourvu de courts rebords radiaux à ses deux extrémités. Le flasque 32 est emmanché par son rebord radial extérieur 32a sur l'alésage 31e de l'anneau 31 en maintenant la carte de circuit imprimé 30 en contact contre le redan 31d. Le rebord axial de petit diamètre 32b du flasque 32 est dirigé vers la bague intérieure 4 tout en entourant la rondelle entretoise 22 à faible distance pour former un passage étroit avec ladite rondelle 22, garantissant ainsi l'étanchéité du roulement et du capteur.

Le défilement à rotation de la partie active 28 du codeur 25 en regard du capteur 29 magnétosensible, par exemple une cellule à effet Hall, permet de détecter les paramètres de rotation recherchés, tels que la vitesse et le déplacement angulaire de l'arbre sur lequel est montée la bague tournante du roulement.

Un câble de transmission de signaux 34 peut être relié à la carte de circuit imprimé 30 et au codeur 29 pour la transmission de signaux vers les éléments de traitement, non représentés. Le câble 34 peut passer par une encoche 36 ménagée dans l'anneau 32 axialement au niveau de l'alésage 32e.

Le cordon de soudure 33 peut être réalisé par un faisceau laser et assure la retenue axiale dans un sens du roulement et de l'ensemble capteur dans le boîtier 8.

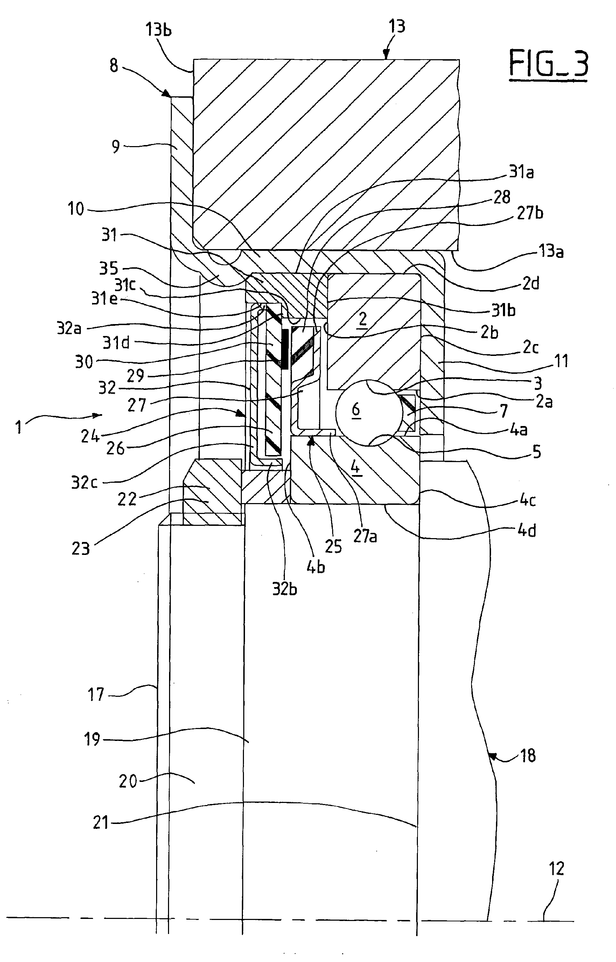

Dans le mode de réalisation illustré sur la figure 3, les éléments semblables portent les mêmes références. Ce mode de réalisation se distingue du précédent par le fait que le cordon de soudure est remplacé par une déformation radiale 35 de la portion tubulaire 10 du boîtier 8 pour former une saillie dirigée vers l'intérieur, assurant la retenue de l'anneau 31 du bloc capteur 26 et la retenue de la bague extérieure 2 du roulement. La déformation radiale 35 peut être réalisée facilement au moyen d'une molette.

On réalise ainsi, grâce à l'invention, un dispositif permettant la fixation d'un roulement instrumenté sur un élément fixe et présentant de nombreux avantages. Le dispositif est extrêmement rigide et compact et permet de supporter, sans jeu axial entre le roulement et l'élément fixe, une charge axiale importante dans les deux sens. L'ensemble constitué par le roulement instrumenté et le boîtier est facile à réaliser et à mettre en place. Enfin, le dispositif suivant l'invention permet de réduire considérablement les risques de rotation accidentelle de la bague fixe lors d'une élévation en température.

En variante, la bague extérieure 2 peut être tournante et la bague intérieure 4 peut être non tournante.

## Revendications

1. Dispositif de roulement instrumenté (1) comprenant un roulement pourvu d'une bague tournante (4) et d'une bague non tournante (2), un bloc capteur (26) monté solidaire de la bague non tournante, et un boîtier (8) logeant ledit roulement et ledit bloc capteur, **caractérisé par le fait que** ledit boîtier (8) comprend deux portions radiales dirigées l'une vers l'axe du dispositif et l'autre vers l'extérieur, et une portion tubulaire (10) raccordant lesdites portions radiales, le bloc capteur (26) étant en contact avec un alésage de la portion tubulaire (10), la portion radiale dirigée vers l'extérieur (9) formant un moyen de positionnement axial et de fixation dudit dispositif sur un support (13), la portion radiale (11) dirigée vers l'axe (12) du dispositif formant un moyen de positionnement axial et d'immobilisation axiale dudit roulement dans le boîtier (8).

2. Dispositif selon la revendication 1, **caractérisé par le fait que** la portion radiale (11) dirigée vers l'axe du dispositif recouvre au moins partiellement une face latérale (2c) de la bague non tournante (2) du roulement.

3. Dispositif selon la revendication 1 ou 2, **caractérisé par le fait que** la portion radiale (11) dirigée vers l'axe (12) du dispositif recouvre au moins partiellement l'espace radial entre les bagues du roulement.

4. Dispositif selon l'une quelconque des revendications précédentes, **caractérisé par le fait que** la portion radiale (11) dirigée vers l'axe (12) du dispositif forme une étanchéité par passage étroit avec la bague tournante (4) du roulement.

5. Dispositif selon l'une quelconque des revendications précédentes, **caractérisé par le fait que** l'immobilisation axiale du roulement et du bloc capteur dans le boîtier (8) est assurée dans un sens par la portion radiale (11) dirigée vers l'axe (12) du dispositif et dans l'autre sens par une soudure (33) entre le boîtier (8) et le bloc capteur (26).

6. Dispositif selon la revendication 5, **caractérisé par le fait que** la soudure est réalisée en cordon sur la périphérie du bloc capteur.

7. Dispositif selon l'une quelconque des revendications précédentes, **caractérisé par le fait que** l'immobilisation axiale du roulement et du bloc capteur dans le boîtier (8) est assurée dans un sens par la portion radiale (11) dirigée vers l'axe (12) du dispositif et dans l'autre sens par une déformation (34) du boîtier (8).

8. Dispositif selon la revendication 7, **caractérisé par le fait que** la déformation du boîtier est en contact avec la périphérie du bloc capteur.

9. Dispositif selon l'une quelconque des revendications précédentes, **caractérisé par le fait que** le bloc capteur comprend une portion métallique périphérique (31) en contact avec la bague non tournante (2) du roulement.

10. Dispositif selon l'une quelconque des revendications précédentes, **caractérisé par le fait que** le bloc capteur (26) comprend un flasque (32) de protection et de fermeture fixé rigidement sur une partie périphérique du bloc capteur.

11. Dispositif selon l'une quelconque des revendications précédentes, **caractérisé par le fait que** le bloc capteur (26) comprend une carte de circuit imprimé (30) supportant au moins un élément capteur (29) et maintenue en place par un flasque (32).

12. Moteur électrique comprenant un carter (13), un stator, un rotor et un dispositif de roulement instrumenté (1) comprenant un roulement pourvu d'une bague tournante (4) solidaire du rotor et d'une bague non tournante (4) solidaire du carter (13), un bloc capteur (26) monté solidaire de la bague non tournante, et un boîtier (8) logeant ledit roulement et ledit bloc capteur, **caractérisé par le fait que** ledit boîtier (8) comprend deux portions radiales dirigées l'une vers l'axe du dispositif et l'autre vers l'extérieur, et une portion tubulaire (10) raccordant lesdites portions radiales, la portion radiale (9) dirigée vers l'extérieur formant un moyen de positionnement axial et de fixation dudit dispositif sur le carter (13), la portion radiale (11) dirigée vers l'axe (12) du dispositif formant un moyen de positionnement axial et d'immobilisation axiale dudit roulement dans le boîtier (8).

13. Moteur selon la revendication précédente, **caractérisé par le fait que** la portion radiale (9) dirigée vers l'extérieur est fixée sur le carter (13) par vissage.
